# EUROPÄISCHE PATENTSCHRIFT

(11) **EP 0 266 639 B1**
(45) Veröffentlichungstag und Bekanntmachung des Hinweises auf die Patenterteilung: **29.12.1993**
(21) Anmeldenummer: 87115499.3
(22) Anmeldetag: 22.10.1987
(51) Int. Cl.: G05D 7/00

(54) **Vorrichtung zur Durchflusssteuerung**
Flow control device
Dispositif de commande de débit

(30) Priorität: 04.11.1986 DE 3637452
(43) Veröffentlichungstag der Anmeldung: 11.05.1988
(73) Patentinhaber: PAGENDARM Beschichtungstechnik GmbH, 22547 Hamburg (DE)
(72) Erfinder: Pagendarm, Ralph, D-2083 Halstenbek (DE); Hebels, Albert, D-2000 Hamburg 50 (DE)

(56) Entgegenhaltungen:
- CH-A- 556 575
- DE-A- 2 040 382
- DE-A- 2 823 735
- FR-A- 1 137 522
- FR-A- 2 030 547
- US-A- 2 890 717
- US-A- 4 596 264

## Beschreibung

Die Erfindung betrifft eine Vorrichtung zum Steuern des Durchflusses eines flüssigen oder gasförmigen Mediums aus einem ersten in einen zweiten Raum gemäß dem Oberbegriff des Anspruchs 1.

Eine derartige Vorrichtung kann beispielsweise zum Steuern des Auftrages eines flüssigen oder gasförmigen Mediums auf eine bewegte Materialbahn eingesetzt werden. Hierzu ist eine Schlitzdüse vorgesehen, deren Länge der Breite der zu beschichtenden Materialbahn gleich ist. Die Schlitzdüse bildet den Auslaß eines Verteilergehäuses dem über eine Rohrleitung das Medium aus einem Vorrat zugeführt wird. Die aus physikalischen Gründen durch Druck- und Strömungsverluste bedingten strömungstechnischen Einström- und Verteilungsverhältnisse im Verteilergehäuse erfordern in der Regel aufwendige konstruktive Maßnahmen, um eine gewünschte Beschickung der Schlitzdüse mit dem flüssigen oder gasförmigen Medium zu gewährleisten.

Die DE-A 20 40 382 beschreibt einen Lüftungskanal mit einer selbstregelnden Lüftungsklappe, die besondere Merkmale für die Geräuschminderung aufweist. Der den Lüftungskanal durchströmende Luftstrom steuert automatisch die Durchflußmenge, indem sich eine elastische Klappe in Abhängigkeit vom Differenzdruck mehr oder weniger an Auflageflächen von in dem Lüftungskanal eingebauten Leitflächen anlegt. Diese Vorrichtung weist keine Schlitzdüse auf und bietet keine Möglichkeit, die Durchflußmenge des Mediums zu beeinflußen. Zum Steuern des Auftrags eines Mediums auf eine bewegte Materialbahn ist diese Vorrichtung ersichtlich ungeeignet. Die FR-A 1 137 522 betrifft ein Ventil zur Regelung einer Durchflußmenge in einem Strömungsrohr. Auch bei dieser Vorrichtung handelt es sich um eine selbstregelnde Durchflußdrossel, bei der sich eine flexible gewölbte Membran in Abhängigkeit von der Durchflußmenge mehr oder weniger an eine Lochplatte mit Durchlaßöffnungen anlegt. Eine Schlitzdüse zum möglichst gleichförmigen Abgeben eines flüssigen oder gasförmigen Mediums ist nicht vorgesehen. Zur gleichmäßigen Beschickung der ganzen Länge einer Lineardüse mit einem abzugebenden Medium ist diese Vorrichtung nicht geeignet. Die DE-OS 28 23 735 beschreibt ein speziell aufgebautes Ventil für die Einstellung und Regelung einer Durchflußmenge in einem Strömungsrohr. Damit kann zwar durch Betätigen eines Einstellmittels jeweils eine bestimmte Durchflußmenge im Strömungsrohr vorgegeben werden. Es ist aber nicht möglich, eine Schlitzdüse über ihre ganze Breite hinweg gleichmäßig bzw. entsprechend einem vorgegebenen Mengenprofil mit einem abzugebenden Medium zu beschicken.

Der Erfindung liegt die Aufgabe zugrunde, eine Vorrichtung der eingangs beschriebenen Art derart zu verbessern, daß auf einfache Weise ein gesteuerter Austrag eines Mediums aus einer Schlitzdüse, insbesondere die Einstellung eines vorgegebenen Durchflußmengenprofils ermöglicht wird.

Gelöst wird diese Aufgabe bei einer Vorrichtung der eingangs angegebenen Art erfindungsgemäß durch die im Kennzeichen des Anspruchs 1 angegebenen Maßnahmen. Durch die individuelle Veränderbarkeit des Querschnitts der Durchflußöffnungen zum zweiten Raum, beispielsweise einem mit einer Schlitzdüse in Verbindung stehenden Raum, hin wird eine schnelle und feinfühlige Einstellung der Durchflußmenge des Mediums entlang der ganzen Breite des Steuerkörpers und damit die Einstellung eines gewünschten Durchflußmengenprofils einer nachgeschalteten Schlitzdüse ermöglicht. Fortführungen, Ausgestaltungen und Varianten der Vorrichtung nach der Erfindung sind in den Unter-Ansprüchen 2 bis 10 enthalten.

Anspruch 2 betrifft eine bevorzugte Ausbildung des Steuerkörpers mit als Durchflußöffnungen dienenden Ausnehmungen, die durch einfaches Auswechseln des Steuerkörpers eine Änderung des Durchflußmengenbereichs und eine Änderung der Durchflußcharakteristik der Vorrichtung erlaubt. Anspruch 3 bezieht sich auf eine Variante des Steuerkörpers, der in diesem Fall sehr einfach gestaltet ist. Die Maßnahme nach Anspruch 4 erlaubt es, die Charakteristik des Steuerverhaltens der Vorrichtung zu beeinflussen, indem durch die Form der Durchflußöffnungen der Zusammenhang zwischen dem Neigungswinkel und der gewünschten Durchflußmenge vorgegeben wird. Anspruch 5 bietet die vorteilhafte Möglichkeit, gleichzeitig an zwei gegenüberliegenden Randbereichen des Steuerkörpers Durchflußöffnungen vorzusehen. Gleichzeitig ergibt sich durch die Form des Steuerkörpers eine besonders günstige Einstellbarkeit des Neigungswinkels zwischen dem Steuerkörper und der Begrenzungswand und damit der Einstellung der Durchflußmenge. Anspruch 6 enthält eine Angabe über ein bevorzugtes Material für den Steuerkörper.

Eine bevorzugte und zweckmäßige Ausgestaltung der Vorrichtung nach der Erfindung ist in Anspruch 7 enthalten. Mit dieser Ausführungsform der Erfindung ist ein je nach den Erfordernissen gesteuerter Auftrag des Mediums auf eine Materialbahn möglich.

Anspruch 8 enthält Maßnahmen zur automatischen Steuerung der Durchflußmengen in Abhängigkeit von den Steuersignalen einer Steueranordnung. Die Maßnahmen nach Anspruch 9 bieten den Vorteil, daß am Stellmittel für den Neigungswinkel des Steuerkörpers der Neigungswinkel selbst bzw. die Durchflußmenge durch die Durchflußöffnungen ablesbar ist. Anspruch 10 enthält eine spezielle Anwendung der Vorrichtung nach der Erfindung, bei der diese Vorrichtung besonders nutzbringend eingesetzt werden kann.

Der Vorteil der Vorrichtung nach der Erfindung besteht insbesondere darin, daß er eine schnelle, einfache und sehr feinfühlige Steuerung des Durchflusses von einem Raum zu einem zweiten Raum erlaubt. Ein weiterer und hier besonders angestrebter Vorteil besteht darin, daß die Durchflußmenge quer zur Durchflußrichtung abschnittsweise unterschiedlich eingestellt werden kann, ohne daß aufwendige Steuereinrichtungen und Stellmittel erforderlich sind. So kann in vorteilhafter Weise der Austrag aus einer Schlitzdüse zur Beschichtung eines laufenden Bahnmaterials jederzeit schnell und feinfühlig unterschiedlichen Bahnstrukturen angepaßt werden, so daß sich immer ein Endprodukt gewünschter Qualität ergibt. Die Vorrichtung, insbesondere der Steuerkörper, ist konstruktiv sehr einfach gestaltet und erfordert für ihren Einsatz keine großen Änderungen an dem Verteilergehäuse einer Schlitzdüse für das Aufbringen von Medium auf eine bewegte Bahn.

Die Erfindung wird nun anhand der Zeichnung näher erläutert. Es zeigen:
- Fig. 1: eine Vorrichtung nach der Erfindung in perspektivischer Ansicht,
- Fig. 2: einen Querschnitt durch eine Vorrichtung nach der Erfindung in schematischer Darstellung,
- Fig. 3: einen Querschnitt durch eine andere Ausführungsform der Vorrichtung nach der Erfindung in schematischer Darstellung,
- Figuren 4A bis 4C: verschiedene Ausführungsformen des Steuerkörpers mit unterschiedlichen Durchlaßöffnungen und
- Fig. 5: eine Draufsicht auf eine weitere Ausführungsform der Vorrichtung nach der Erfindung.

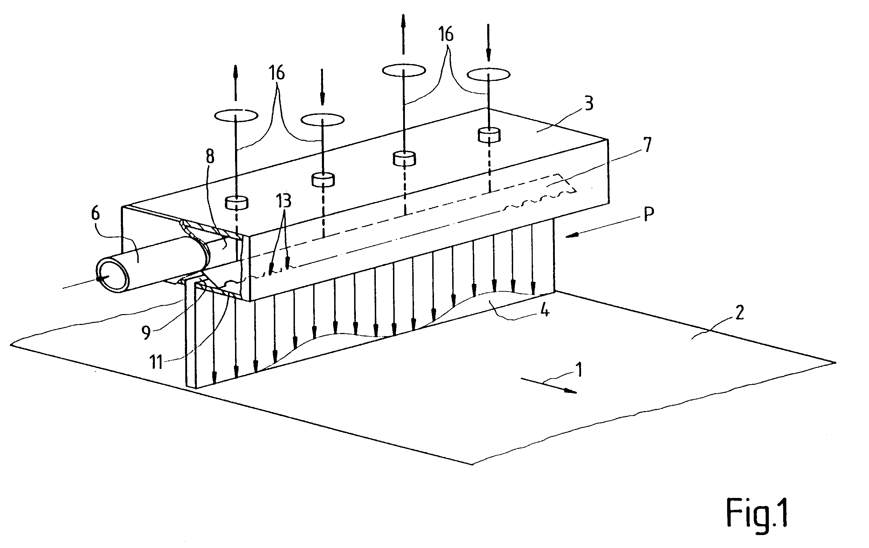

Fig. 1 zeigt in einer perspektivischen Ansicht eine Vorrichtung nach der Erfindung zur Beschichtung einer in Richtung eines Pfeiles 1 bewegten Materialbahn 2 mit einem flüssigen oder gasförmigen Medium. Die Vorrichtung besteht aus einem Verteilergehäuse 3, das mit einer Schlitzdüse 4 in Verbindung steht. Über eine Zuführleitung 6 ist das Verteilergehäuse mit einer in der Zeichnung nicht gezeigten, das Beschichtungsmedium abgebenden Druckquelle verbunden.

Ohne besondere konstruktive Maßnahmen stellt sich bei einer solchen Vorrichtung im Innern des Verteilergehäuses 3 aus strömungstechnischen Gründen und bedingt durch auftretende Druck- und Strömungsverluste eine Druckverteilung ein, die bewirkt, daß in der Nähe der Einmündung der Zuführleitung höhere Drücke herrschen als am entgegengesetzten Ende des Verteilergehäuses. Als Folge davon ergibt sich von der Seite der Zuführleitung her über die Länge der Schlitzdüse 4 ein abnehmendes Mengenprofil des ausströmenden Mediums.

Bei der Behandlung bahnförmiger Materialien mit flüssigen oder gasförmigen Medien werden häufig unterschiedliche Anforderungen gestellt. Auf eine gleichmäßig strukturierte Materialbahn sind die flüssigen oder gasförmigen Medien beispielsweise so aufzubringen, daß ihr Flächengewicht, ihre Feuchte und Dicke über die Länge und Breite der Bahn konstant sind. Eine ungleichmäßig strukturierte Bahn muß so mit den genannten Medien behandelt werden, daß die Ungleichmäßigkeiten der Bahn möglichst ausgeglichen werden. Diese Maßnahmen dienen dem Ziel, ein möglichst gleichmäßiges Endprodukt herzustellen. Die Ungleichmäßigkeiten der Materialbahnen sind in der Praxis gewöhnlich gering, die Anforderungen an die Gleichmäßigkeit des Endproduktes aber sehr hoch. Dies bedingt, daß die Vorrichtung zum Steuern des Massedurchflusses durch die Schlitzdüse im Hinblick auf die Anpassung des Austrags aus der Schlitzdüse an die Ungleichmäßigkeiten der Materialbahn hohe Ansprüche erfüllen muß.

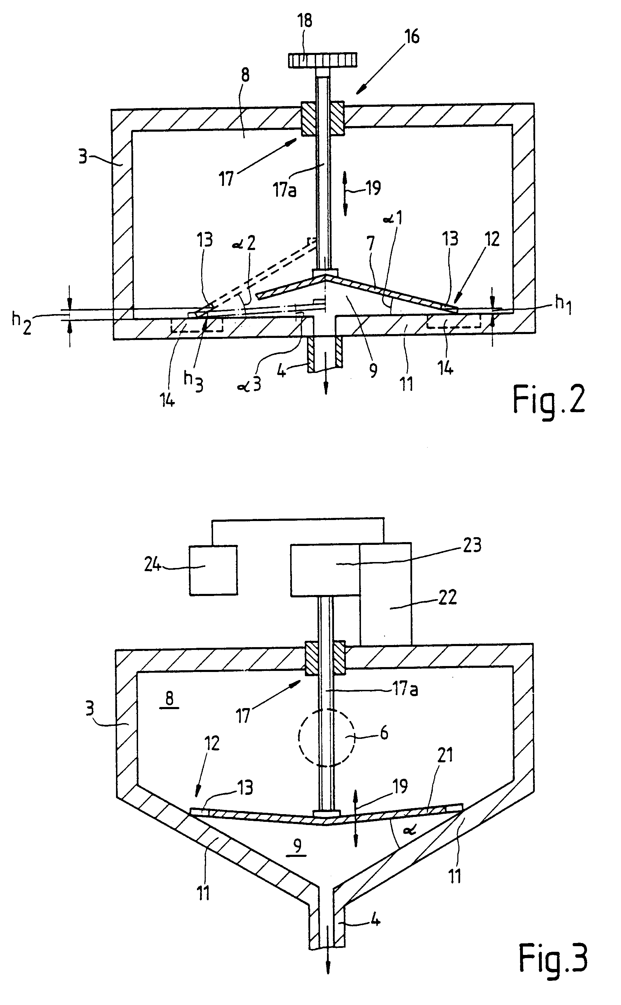

Um dem Genüge zu tun, ist gemäß der Erfindung nun vorgesehen, den Innenraum des Verteilergehäuses 3 durch einen Steuerkörper 7 in einen ersten Raum 8 und einen zweiten Raum 9 zu trennen. Der Steuerkörper 7 liegt dabei unter einem Neigungswindel α an einer Begrenzungswand 11 an. Im Bereich der Berührungszone 12 zwischen dem Steuerkörper 7 und der Begrenzungswand 11 sind Durchflußöffnungen 13 vorgesehen, die vorzugsweise im Randbereich des Steuerkörpers 7 angeordnet sind. Es ist natürlich auch möglich, als Durchflußöffnungen Kanäle 14 vorzusehen, die in Durchflußrichtung zwischen dem ersten und dem zweiten Raum 8 bzw. 9 in der Begrenzungswand 11 verlaufen und die Berührungszone 12 kreuzen (vergl. Fig. 2).

Das flüssige oder gasförmige Medium strömt unter Druck durch die Zuführleitung 6 in den ersten Raum 8 des Verteilergehäuses 3 und fließt dann durch die Durchflußöffnungen 13 bzw. 14 in den durch den Steuerkörper 7 abgetrennten zweiten Raum 9, von wo es durch die Schlitzdüse 4 zur Materialbahn 2 hin austritt.

Gemäß der Erfindung ist der Steuerkörper 7 als reversierbar verformbarer Materialstreifen ausgebildet und in der Ausführungsform nach den Figuren 1 und 2 dachförmig gestaltet. Beide Ränder dieses dachartig geformten Steuerkörpers liegen beidseits der Schlitzdüse 4 und parallel zu ihr auf der Begrenzungswand 11 des Verteilergehäuses 3 auf.

In der Firstlinie dieses dachartig geformten Steuerkörpers 7 greifen in benachbarten Abschnitten nebeneinander Stellmittel 16 an, die auf den Steuerkörper 7 einen veränderbarn Druck ausüben. Im Falle der Fig. 2 besteht dieses Stellmittel 16 aus einem im Verteilergehäuse 3 geführten und mit einem Rändelrad 18 betätigbaren Gewindetrieb 17. Durch Drehen des Rändelrades 18 wird die Gewindestange 17a in Richtung eines Doppelpfeiles 19 mehr oder weniger in das Verteilergehäuse 3 hinein- oder herausgedreht.

Durch diese Veränderung des Druckes auf den reversierbar verformbaren Steuerkörper 7 ist der Neigungswinkel zwischen dem Steuerkörper und der Begrenzungswand 11 einstellbar. Mit der Veränderung des Neigungswinkels ändert sich gleichzeitig auch der Querschnitt der Durchflußöffnungen 13 bzw. 14 in der Berührungszone 12 zwischen dem Steuerkörper und der Begrenzungswand. Für drei unterschiedliche Neigungswinkel sind die Verhältnisse in Fig. 2 dargestellt. Eine mittlere Größe der Durchflußöffnungen ergibt sich beim Neigungswinkel α1 , der in Fig. 2 mit ausgezogenen Linien gezeigt ist. Die Höhe der als Durchflußöffnungen 13 vorgesehenen Ausnehmungen im Rand des Steuerkörpers 7 beträgt in diesem Falle h₁. Die Durchflußmenge ist in diesem Fall sowohl nach oben als auch nach unten hin noch veränderbar. Soll die Durchflußmenge vergrößert werden, so muß der Steuerkörper 7 entlastet werden, wobei sich ein größerer Neigungswinkel α2 einstellt, der in Fig. 2 mit gestrichelten Linien gezeigt ist. Die Höhe der Durchflußöffnungen stellt sich dabei auf h₂ ein, so daß mehr Medium durch die Durchflußöffnungen in den zweiten Raum 9 und zur Schlitzdüse 4 strömen kann. Durch Erhöhung des Drucks auf den Steuerkörper 7 wird der Neigungswinkel verkleinert, bis er beispielsweise die Größe des in Fig. 2 mit strichpunktierten Linien dargestellten Neigungswinkels α3 erreicht. Die Höhe der Druchflußöffnungen 13 beträgt jetzt nur noch h₃, so daß nur noch sehr wenig Medium in den zweiten Raum 9 strömen kann. Durch weiteres Belasten des Steuerkörpers 7 können die Durchflußöffnugnen sogar ganz geschlossen werden. Mit der Vorrichtung nach der Erfindung ist also eine sehr feinfühlige Einstellung der Durchflußmenge zur Schlitzdüse 4 hin möglich.

Fig. 1 zeigt, daß in benachbarten Abschnitten entlang der Länge der Schlitzdüse 4 mehrere Stellmittel 16 zur Einstellung des Neigungswinkels des Steuerkörpers 7 zur Begrenzungswand 11 vorgesehen sind. Auf diese Weise kann der Neigungswinkel α in benachbarten Abschnitten des Steuerkörpers unterschiedlich eingestellt werden, so daß die Durchflußmenge vom ersten Raum 8 in den zweiten Raum 9 und die Schlitzdüse 4 über die Breite der Materialbahn 2 entsprechend den von der Bahn vorgegebenen Anforderungen unterschiedlich eingestellt werden kann. Ein mögliches Mengenprofil, das durch unterschiedliche Betätigung der Stellmittel 16 eingestellt werden kann, ist durch die Pfeile P angedeutet. Dadurch kann eine ungleichmäßig strukturierte Materialbahn 2 derart unterschiedlich mit Medium behandelt werden, daß die Unregelmäßigkeiten der Bahnstruktur ausgeglichen werden. Die Vorrichtung nach der Erfindung wird in einer solchen Ausführunsform also auch hohen Ansprüchen an die Steuerbarkeit des Auftrages von Medium auf eine Materialbahn gerecht.

Fig. 3 zeigt eine etwas andere Auführungsform der Vorrichtung nach der Erfindung, wobei gleiche Teile aber mit denselben Bezugszeichen versehen sind wie in den Figuren 1 und 2. Auch hier ist der Innenraum des Verteilergehäuses 3 in einen ersten Raum 8 und einen zweiten Raum 9 gesteilt.

Zur Trennung dieser beiden Räume ist ein Steuerkörper 21 vorgesehen, der auch hier aus einem reversierbar verformbaren Materialstreifen besteht. Als Material für diesen Steuerkörper kommt wie auch für den Steuerkörper 7 beispielsweise ein Blechstreifen infrage. Andere reversierbar verformbare Materialien sind natürlich hier auch einsetzbar, soweit sie sich mit dem zu fördernden Medium vertragen. Im Falle der Fig. 3 besteht der Steuerkörper 21 aus einem ebenen Materialstreifen, während die Begrenzungswand 11, an welcher der Steuerkörper anliegt, geneigt ist. Auch auf diese Weise leigt zwischen dem Steuerkörper 21 und der Begrenzungswand 11 ein Neigungswinkel α, durch dessen Veränderung der Querschnitt der Durchflußöffnungen in der Berührungszone 12 verändert werden kann.

Anstelle einer Handbetätigung ist im Falle der Fig. 3 eine automatische Verstellung des Neigungswinkels vorgesehen, wozu an der Oberseite des Verteilergehäuses 3 ein Motor 22 angeordnet ist, der über ein Getriebe 23 die Gewindestange 17a des als Stellmittel vorgesehenen Gewindetriebs 17 antreibt. Der Motor 22 kann von einer Steueranordnung 24 entsprechend den durch die zu behandelnde Materialbahn 2 vorgegebenen Anforderungen gesteuert werden.

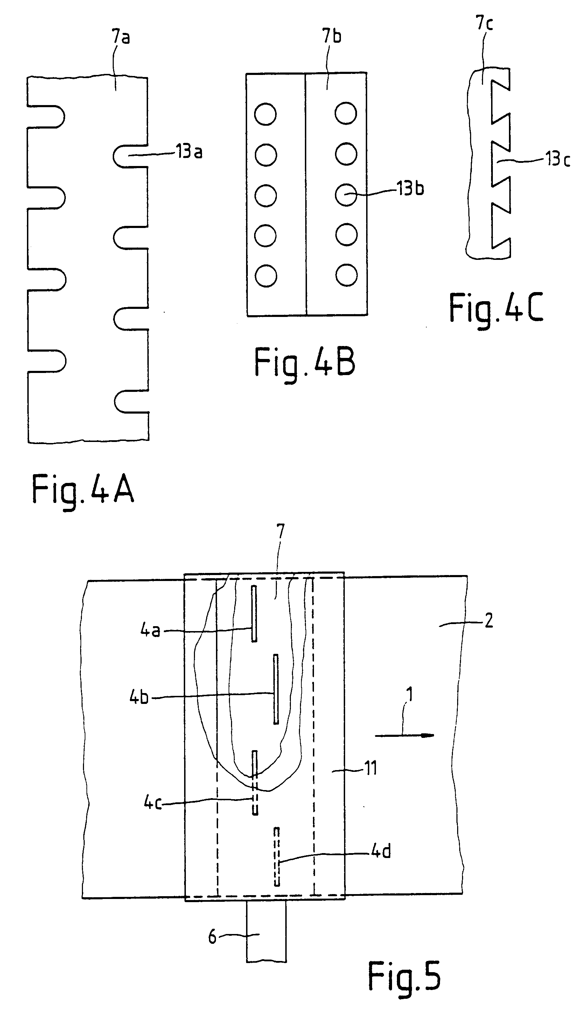

Die Figuren 4A bis C zeigen Draufsichten auf verschiedene Ausführungsformen, die als Steuerkörper 7 bzw. 21 eingesetzt werden können. In Fig. 4A ist ein Steuerkörper 7a dargestellt, in dessen Randbereich halbkreisförmige bzw. U-förmige Ausnehmungen 13a als Durchflußöffnungen vorgesehen sind. Im Falle der Fig. 4B ist ein Steuerkörper 7b gezeigt, bei dem die Durchflußöffnungen 13b, die im gezeigten Fall kreisförmig ausgebildet sind, nicht unmittelbar am Rand des Steuerkörpers sondern ein Stück vom Rand weg im Bereich der Berührungszone liegen. Fig. 4C zeigt einen Steuerkörper 7c, bei dem die Breite der Durchflußöffnungen 13c in Durchflußrichtung unterschiedlich ist. Durch eine solche Gestaltung der Durchflußöffnungen ist eine Einflußnahme auf die Steuerungscharakteristik der Durchflußmenge möglich.

Die langgestreckte Schlitzdüse 4 kann zur Erhöhung der Stabilität der Vorrichtung im Auslaßbereich des zweiten Raumes 9 durch die beiderseits der Schlitzdüse leigenden Begrenzungswände 11 verbindende Stege unterbrochen sein. Anstelle einer einzigen langgestreckten Schlitzdüse können quer zur Förderrichtung 1 der Materialbahn 2 nebeneinander mehrere, auch in Förderrichtung zueinander versetzt angeordnete Schlitzdüsen vorgesehen sein, die in den durch den Steuerkörper 7 bzw. 21 von dem ersten Raum 8 abgetrennten zweiten Raum 9 münden. Eine Draufsicht auf eine solche Anordnung zeigt die Fig. 5, wo die Schlitzdüse aus mehreren nebeneinanderliegenden Abschnitten 4a bis 4d besteht, die in Förderrichtung 1 der gestrichelt angedeuteten Materialbahn 2 versetzt nebeneinander angeordnet sind. Die Lage des Steuerkörpers 7 ist in Fig. 5 gestrichelt angedeutet. Die Steuerung der Durchflußmengen durch die Schlitzdüsenabschnitte 4a bis 4d erfolgt wie im Zusammenhang mit den Figuren 1 und 2 beschrieben.

In den beschriebenen Ausführungsbeispielen leigen die Ränder der Steuerkörper 7 und 21 einfach auf den Begrenzungswänden 11 auf. Es ist natürlich auch möglich, den Steuerkörper wenigstens an einem Rand an der angrenzenden Begrenzungswand anzulenken, so daß er dort um eine quer zur Durchflußrichtung verlaufende Achse schwenkbar ist. In den gezeigten Beispielen wird der Neigungswinkel α durch Verformung des reversierbar verformbaren Steuerkörpers verändert. Setzt man einen nicht verformbaren Steurerkörper ein, so kann der Neigungswinkel und damit die Druchflußmenge durch Kippen des Steuerkörpers um eine quer zur Durchflußrichtung verlaufende Achse eingestellt werden. Das Stellmittel 16 zum Verstellen des Neigungswinkels α kann so ausgebildet sein, daß eine Umdrehung des Betätigungsorgans, beispielsweise des Rändelrades 18, für die Verstellung des Neigungswinkels aus einer Endstellung in die andere genügt. Hierzu ist es beim Ausführungsbeispiel nach Fig. 2 nur erforderlich, die Steigung der Gewindespindel 17a entsprechend zu wählen. Das ergibt den Vorteil, daß an der Winkelstellung des Rändelrades, das hierzu eine entsprechende Markierung tragen kann, der eingestellte Neigungswinkel bzw. die Durchflußmenge erkennbar ist.

## Patentansprüche

1. Vorrichtung zum Steuern des Durchflusses eines flüssigen oder gasförmigen Mediums aus einem ersten in einen zweiten Raum mit einem die Räume voneinander trennenden, unter einem vorgegebenen Neigungswinkel (α) an einer Begrenzungswand geneigt anliegenden Steuerkörper und mit der Berührungszone (12) zwischen der Begrenzungswand und dem Steuerkörper zugeordneten, die beiden Räume verbindenden Durchflußöffnungen, deren Querschnitt durch Verstellung des Neigungswinkels des Steuerkörpers veränderbar ist, dadurch gekennzeichnet, daß der zweite Raum (9) einen als langgestreckte Schlitzdüse (4) ausgebildeten Auslaß aufweist, daß der Steuerkörper (7,21) sich entlang der ganzen Länge der Schlitzdüse erstreckt und nebeneinander über die Länge der Schlitzdüse verteilte Durchflußöffnungen (13,14) vom ersten zum zweiten Raum aufweist bzw. begrenzt und daß dem aus einem reversibel verformbaren Materialstreifen bestehenden Steuerkörper (7,21) nebeneinander mehrere Stellmittel (16) zum individuellen Einstellen des Neigungswinkels (α) des vom jeweiligen Stellmittel (16) beaufschlagten Abschnitts des Steuerkörpers zur Begrenzungswand (11) in Abhängigkeit von einem gewünschten Durchflußmengenprofil zugeordnet sind.

2. Vorrichtung nach Anspruch 1, dadurch gekennzeichnet, daß in wenigstens einem quer zur Durchflußrichtung verlaufenden Randbereich des Steuerkörpers (7,21) Ausnehmungen (13) vorgesehen sind, welche die durch den Steuerkörper getrennten Räume (8,9) als Durchflußöffnungen verbinden.

3. Vorrichtung nach Anspruch 1 oder 2, dadurch gekennzeichnet, daß die Begrenzungswand (11) in Durchflußrichtung verlaufende Kanäle (14) aufweist, welche die Berührungszone (12) zwischen der Begrenzungswand und dem Steuerkörper (7,21) als Durchlaßöffnungen kreuzen und wenigstens in einem Raum (8 oder 9) im Bereich der Berührungszone enden und daß die Kanäle wenigstens in einem der beiden Räume entsprechend dem Neigungswinkel (α) des Steuerkörpers geschlossen oder unterschiedlich weit geöffnet sind.

4. Vorrichtung nach einem der Ansprüche 1 bis 3, dadurch gekennzeichnet, daß die quer zur Durchflußrichtung gemessene Breite der Durchflußöffnungen (13c) in Durchflußrichtung unterschiedlich ist.

5. Vorrichtung nach einem der Ansprüche 1 bis 4, dadurch gekennzeichnet, daß der Steuerkörper (7) als ein quer zur Durchflußrichtung dachartig oder gewölbt geformter reversibel verformbarer Materialstreifen ausgebildet ist und daß wenigstens einer der quer zur Durchflußrichtung verlaufenden Randbereiche an der Begrenzungswand (11) anliegt.

6. Vorrichtung nach einem der Ansprüche 1 bis 5, dadurch gekennzeichnet, daß der Steuerkörper (7,21) aus einem Blechstreifen besteht.

7. Vorrichtung nach einem der Ansprüche 1 bis 6, dadurch gekennzeichnet, daß in einem Gehäuse (3) mit einem als Schlitzdüse (4) ausgebildeten Auslaß ein den Gehäuseinnenraum (8) gegen die Schlitzdüse (4) begrenzender Steuerkörper (7,21) angeordnet ist, daß wenigstens ein Rand des Steuerkörpers (7, 21) entlang der Schlitzdüse unter einem vorgegebenen Neigungswinkel (α) an einer Begrenzungswand (11) anliegt, daß der Berührungszone (12) zwischen dem Steuerkörper und der Begrenzungswand den Gehäuseinnenraum (8) mit der Schlitzdüse (4) verbindende Durchflußöffnungen (13,14) vorgesehen sind und daß Stellmittel (16) zum Verändern des Neigungswinkels (α) in Abhängigkeit von einer gewünschten Durchflußmenge vorgesehen sind.

8. Vorrichtung nach einem der Ansprüche 1 bis 7, dadurch gekennzeichnet, daß jedes Stellmittel (16) in Abhängigkeit von Steuersignalen einer Steueranordnung (24) motorisch (22,23) betätigbar ist.

9. Vorrichtung nach einem der Ansprüche 1 bis 8, dadurch gekennzeichnet, daß als Stellmittel (16) ein Drehantrieb (17,18;22,23) vorgesehen ist und daß der Stellbereich des Neigungswinkels (α) des Steuerkörpers (7,21) höchstens einer vollen Umdrehung des Stellmittels entspricht.

10. Vorrichtung nach einem der Ansprüche 1 bis 9, dadurch gekennzeichnet, daß sie zur gesteuerten Beschickung einer Schlitzdüse (4) zum Behandeln einer bewegten Materialbahn (2) mit einem gasförmigen oder flüssigen Medium vorgesehen ist.

## Claims

1. Apparatus for controlling the flow of a liquid or gaseous medium from a first chamber into a second chamber, having a control body which separates the chambers from one another and bears in inclined manner against a delimitation wall at a predetermined angle of inclination (α), and having flow openings which are associated with the contact zone (12) between the delimitation wall and the control body and which connect the two chambers, and whereof the cross-section can be altered by adjusting the angle of incline of the control body, characterized in that the second chamber (9) has an outlet constructed as an elongate slotted die (4), in that the control body (7, 21) extends along the entire length of the slotted die and has or delimits flow openings (13, 14) from the first to the second chamber distributed next to one another over the length of the slotted die, and in that there are associated with the control body (7, 21), which comprises a reversibly deformable material strip a plurality of adjustment means (16) next to one another for individually adjusting the angle of inclination (α) of the section of the control body acted upon by the respective adjustment means (16) to the delimitation wall (11), as a function of a desired flow rate profile.

2. Apparatus according to Claim 1, characterized in that cutouts (13) which, in the form of flow openings, connect the chambers (8, 9) separated by the control body are provided in at least one edge region of the control body (7, 21) running transversely with respect to the direction of flow.

3. Apparatus according to Claim 1 or 2 characterized in that the delimitation wall has channels (14) which run in the direction of flow and which, in the form of through openings, intersect the contact zone (12) between the delimitation wall and the control body (7, 21) and end at least in one chamber (8 or 9) in the region of the contact zone, and in that the channels are closed or are opened to differing extents at least in one of the two chambers in accordance with the angle of inclination (α) of the control body.

4. Apparatus according to one of claims 1 to 3, characterized in that the width of the flow openings (13c), as measured transversely with respect to the direction of flow, is different in the direction of flow.

5. Apparatus according to one of claims 1 to 4, characterized in that the control body (7) is constructed as a reversibly deformable material strip which is shaped in the manner of a roof or dome transversely with respect to the direction of flow, and in that at least one of the edge regions running transversely with respect to the direction of flow bears against the delimitation wall (11).

6. Apparatus according to one of claims 1 to 5, characterized in that the control body (7, 21) comprises a sheet-metal strip.

7. Apparatus according to one of claims 1 to 6, characterized in that there is arranged in a housing (3) having an outlet constructed as a slotted die (4) a control body (7, 21) delimiting the housing interior (8) with respect to the slotted die (4), in that at least one edge of the control body (7, 21) bears against a delimitation wall (11) along the slotted die at a predetermined angle of inclination (α), in that there are provided for the contact zone (12) between the control body and the delimitation wall flow openings (13, 14) connecting the housing interior (8) to the slotted die (4), and in that adjustment means (16) for altering the angle of inclination (α) as a function of a desired flow rate are provided.

8. Apparatus according to one of claims 1 to 7, characterized in that each adjustment means (16) can be actuated as a function of control signals of a control arrangement (24) by motor means (22, 23).

9. Apparatus according to one of claims 1 to 8, characterized in that a rotary drive (17, 18; 22, 23) is provided as the adjustment means (16), and in that the adjustment range of the angle of inclination (α) of the control body (7, 21) corresponds at most to a complete revolution of the adjustment means.

10. Apparatus according to one of claims 1 to 9, characterized in that it is provided for controlled charging of a slotted die (4) for treating a moving material web (2) with a gaseous or liquid medium.

## Revendications

1. Dispositif pour la commande du passage d'un milieu liquide ou gazeux hors d'un premier espace dans un deuxième espace, comportant un corps de commande, qui sépare les espaces l'un de l'autre et est adjacent à une paroi de limitation en étant incliné d'un angle d'inclinaison prédéterminé (α), et des ouvertures de passage, qui sont associées à la zone de contact (12) entre la paroi de limitation et les corps de commande et relient les deux espaces, dont la section transversale peut être modifiée par déplacement de l'angle d'inclinaison du corps de commande, caractérisé en ce que le deuxième espace (9) présente une sortie réalisée sous la forme d'une buse à fente allongée (4), que le corps de commande (7,21) s'étend sur toute la longueur de la buse à fente et présente ou bien limite des ouvertures de passage (13,14), qui sont réparties côte-à-côte sur toute la longueur de la buse à fente et relient le premier espace et le deuxième espace, et qu'au corps de commande (7,21), qui est constitué par une bande d'un matériau déformable de façon réversible, sont associés côte-à-côte plusieurs moyens de positionnement (16) servant à positionner individuellement l'angle d'inclinaison (α) de la section du corps de commande, sollicitée par le moyen de positionnement respectif (16), par rapport à la paroi de limitation (11), en fonction d'un profil de débit de passage souhaité.

2. Dispositif selon la revendication 1, caractérisé en ce que dans au moins une région de bord, qui s'étend transversalement par rapport à la direction de passage, du corps de commande (7,21) il est prévu des évidements (13), qui relient les espaces (8,9), séparés par le corps de commande, sous la forme d'ouvertures de passage.

3. Dispositif selon la revendication 1 ou 2, caractérisé en ce que la paroi de limitation (11) présente des canaux (14), qui s'étendent dans la direction de passage et croisent la zone de contact (12) entre la paroi de limitation et le corps de commande (7,21), en formant des ouvertures de passage, et se terminent au moins dans un espace (8 ou 9) dans la région de la zone de contact, et que les canaux sont fermés ou sont ouverts avec une amplitude différente, au moins dans un des deux espaces, conformément à l'angle d'inclinaison (α) du corps de commande.

4. Dispositif selon l'une des revendications 1 à 3, caractérisé en ce que la largeur des ouvertures de passage (13c), qui est mesurée transversalement à la direction de passage, est différente dans cette direction.

5. Dispositif selon l'une des revendications 1 à 4, caractérisé en ce que le corps de commande (7) est constitué comme une bande de matériau déformable de façon réversible, formée semblable à un toit ou bombé, transversale à la direction de passage, et qu'au moins une des régions de bord, qui s'étendent transversalement à la direction de passage, est adjacente à la paroi de limitation (11).

6. Dispositif selon l'une des revendications 1 à 5, caractérisé en ce que le corps de commande (7,21) est constitué par une bande de tôle.

7. Dispositif selon l'une des revendications 1 à 6, caractérisé en ce que dans un boîtier (3), comportant une sortie réalisée sous la forme d'une buse à fente (4) est agencé un corps de commande (7,21), qui limite l'espace intérieur (8) de boîtier par rapport à la buse à fente (4), qu'au moins un bord du corps de commande (7,21) est adjacent le long de la buse à fente à une paroi de limitation (11) sous un angle d'inclinaison prédéterminé (α), qu'il est prévu des ouvertures de passage (13,14), à la région de contact (12) entre le corps de commande et la paroi de limitation reliant la chambre intérieure (8) du boîtier avec la buse à fente (7) et qu'il est prévu des moyens de positionnement (16) servant à modifier l'angle d'inclinaison (α) en fonction d'un débit de passage souhaité.

8. Dispositif selon l'une des revendications 1 à 7, caractérisé en ce que chaque moyen de positionnement (16) peut être actionné au moyen d'un moteur (22,23) en fonction de signaux de commande d'un agencement de commande (24).

9. Dispositif selon l'une des revendications 1 à 8, caractérisé en ce qu'il est prévu comme moyen de positionnement (16) un dispositif d'entraînement en rotation (17,18;22,23), et que la plage de positionnement de l'angle d'inclinaison (α) du corps de commande (7,21) correspond au plus à une rotation complète du moyen de positionnement.

10. Dispositif selon l'une des revendications 1 à 9, caractérisé en ce qu'il est prévu pour l'alimentation commandée d'une buse à fente (4) pour le traitement d'une bande de matériau déplacée (2) avec un milieu gazeux ou liquide.
